(19) Europäisches Patentamt
European Patent Office
Office européen des brevets

(11) Veröffentlichungsnummer : **0 360 085 B1**

(12) # EUROPÄISCHE PATENTSCHRIFT

(45) Veröffentlichungstag der Patentschrift : **09.12.92 Patentblatt 92/50**

(51) Int. Cl.$^5$ : **C09B 43/18,** C09D 11/02

(21) Anmeldenummer : **89116589.6**

(22) Anmeldetag : **08.09.89**

(54) **Offsetdruckverfahren und -farben.**

(30) Priorität : **21.09.88 DE 3831979**

(43) Veröffentlichungstag der Anmeldung : **28.03.90 Patentblatt 90/13**

(45) Bekanntmachung des Hinweises auf die Patenterteilung : **09.12.92 Patentblatt 92/50**

(84) Benannte Vertragsstaaten : **DE FR GB IT NL**

(56) Entgegenhaltungen : **DE-A- 211 326**

(73) Patentinhaber : **BAYER AG**
**W-5090 Leverkusen 1 Bayerwerk (DE)**

(72) Erfinder : **Lorenz, Manfred, Dr.**
**Haferkamp 1**
**W-5000 Köln 80 (DE)**
Erfinder : **Haus, Artur, Dr.**
**Zum Eschental 8**
**W-5063 Overath (DE)**

EP 0 360 085 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Offsetdruckverfahren und -farben.

Aus der DE-A1-36 00 387 sind Illustrationstiefdruckverfahren und -farben unter Verwendung bestimmter Veresterungsprodukte von Pyridinazofarbstoffen bekannt. Diese Publikation enthält keinerlei Hinweise, daß Veresterungsprodukte von Pyridinazofarbstoffen auch für das Offsetdruckverfahren, bei dem es sich im Gegensatz zum Illustrationstiefdruck um ein Flackdruckverfahren handelt, und bei dem chemisch andersartige Druckfarben eingesetzt werden, geeignet sind. Insbesondere war die gute Verträglichkeit der gemäß der vorliegenden Erfindung eingesetzten Farbstoffe mit den Bestandteilen der Offsetdruckfarbe nicht zu erwarten.

Die Erfindung betrifft ein Offsetdruckverfahren, dadurch gekennzeichnet, daß man estergruppenhaltige Pyridonazofarbstoffe verwendet, die dadurch erhältlich sind, daß man hydroxylgruppenhaltige Pyridonazofarbstoffe der Formel

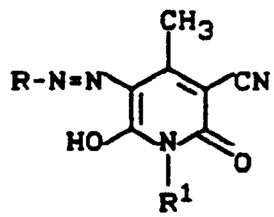

(I)

in der

R $(HO)_m$-D- oder

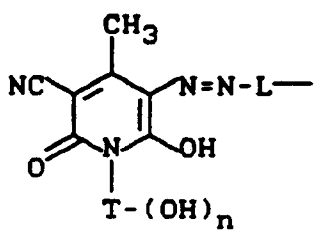

$R^1$ $(HO)_o$-$T^1$- oder

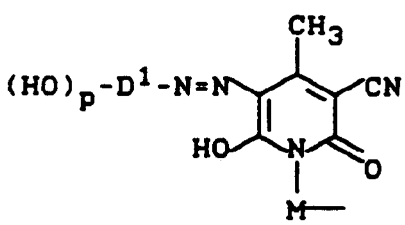

D, $D^1$ Reste von Diazokomponenten bezeichnen,

L für

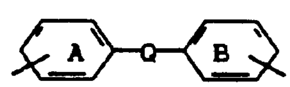

,

wobei die mit A und B bezeichneten Ringe substituiert sein können, steht,

Q für -O-, -S-, $-SO_2-$, -CO-, $-C_xH_{2x}-$, (x = 1, 2, 3, 4, 5, 6), vorzugsweise $-CH_2-$, $-CH_2CH_2-$, $-C(CH_3)_2-$, oder

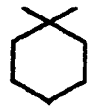

steht

M den Rest eines gegebenenfalls substituierten Kohlenwasserstoffs bezeichnet, dessen C-Kette durch ein oder mehrere, nicht-nachbarständige O-Atome unterbrochen sein kann,

T, $T^1$ für aliphatische oder araliphatische Reste stehen, die durch ein oder mehrere O-Atom(e) unterbrochen sein können und

m,n,o,p 0, 1, 2 oder 3 sind, mit der Maßgabe, daß die Summe aus m + o oder m + p oder n + o oder n + p 1, 2 oder 3 beträgt mit $C_{30}$-$C_{60}$-Di- und/oder Tricarbonsäuren und gegebenenfalls anderen Mono- und/oder Dicarbonsäuren verestert, und man im Veresterungsprodukt gegebenenfalls noch vorhandene Carboxylgruppen gegebenenfalls mit Mono- oder Polyolen verestert.

Bevorzugte hydroxylguppenhaltige Pyridonazofarbstoffe entsprechen den Formeln:

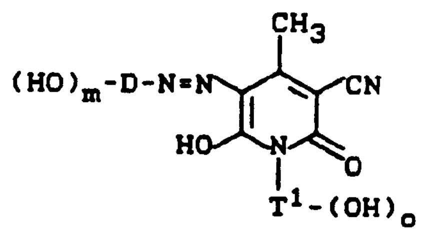

(II)

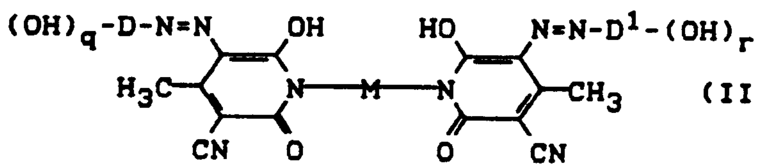

(III)

mit q, r = 0, 1, 2, 3, mit der Maßgabe, daß q + r 1, 2 oder 3 beträgt

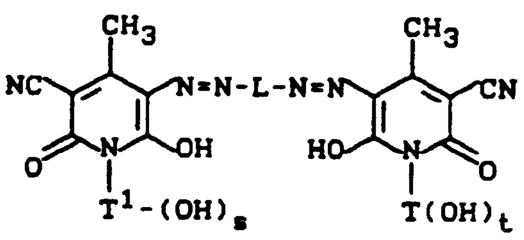

(IV)

wobei s, t = 0, 1, 2, 3, mit der Maßgabe, daß s + t 1, 2 oder 3 beträgt.

Hydroxygruppenhaltige Farbstoffe der Formeln I bis IV, die eines oder mehrere der nachfolgenden Strukturelemente aufweisen, sind besonders bevorzugt.

1. D steht für einen Phenylrest, der abhängig von der Zahl der OH-Gruppen 1 bis 4 Substituenten aus der Reihe gegebenenfalls substituiertes $C_1$-$C_{12}$-Alkyl, $C_2$-$C_{12}$-Alkenyl, Cyclohexyl, Cyclohexenyl, Cyclopentyl, Benzyl, Phenylisopropyl, Halogen wie Cl, Br, F, $C_1$-$C_{18}$-Alkoxy, gegebenenfalls substituiertes Phenoxy, -CN, $-CF_3$, $-NO_2$, gegebenenfalls substituiertes $C_1$-$C_{18}$-Alkylsulfonyl, gegebenenfalls substituiertes Phenylsulfonyl, gegebenenfalls substituiertes Benzylsulfonyl, gegebenenfalls substituiertes Phenoxysulfonyl, gegebenenfalls substituiertes Phenylsulfonyloxy, gegebenenfalls substituiertes $C_1$-$C_{18}$-Alkoxycarbonyl, Benzyloxycarbonyl, 2-Phenylethyloxycarbonyl, Cyclohexyloxycarbonyl tragen kann.

Die Alkylreste in $C_1$-$C_{12}$-Alkyl, $C_1$-$C_{18}$-Alkoxy, $C_1$-$C_{18}$-Alkylsulfonyl, $C_1$-$C_{18}$-Alkoxycarbonyl können z.B. durch -OH, $C_1$-$C_{18}$-Alkoxy, einen Rest der Formel $T^2$-$(CH_2CH_2O)_a$-, wobei $T^2$ für $C_1$-$C_{18}$-Alkoxy, $C_2$-$C_{18}$-Alkenyloxy oder gegebenenfalls substituiertes Phenoxy und a für 1 bis 6 steht, oder -CN substituiert sein.

Die Phenylrest in Phenoxy, Phenylsulfonyl, Phenoxysulfonyl, Phenylsulfonyloxy und Phenylsulfonyl können z.B. durch $C_1$-$C_4$-Alkyl, Cyclohexyl, Phenyl, Phenylisopropyl oder Halogen wie Cl und Br substituiert sein.

Als Beispiele für $(HO)_m$-D- bzw. $(HO)_q$-D- seien genannt:

Phenyl, o-, m- und p-Methylphenyl, o- und p-Ethylphenyl-, 2,3-, 3,4-, 2,4- und 2,5-Dimethylphenyl, o- und p-i-Propylphenyl, 2-Methyl-5-i-propylphenyl, 4-tert.-Butylphenyl, 4-sek.-Butylphenyl, o- und p-Dodecylanilin, wobei der Dodecylrest geradkettig oder verzweigt sein kann, 4-Cyclohexylphenyl, 4-Cyclohexyl-2-methylphenyl, 4-(1-Cyclohexen-1-yl)-phenyl, 4-(2-Phenyl-i-propyl)-phenyl, o-, m- und p-Chlorphenyl, 2,3-, 2,4-, 2,5- und 3,4-Dichlorphenyl, 5-Chlor-2-methylphenyl, 4-Chlor-2-methylphenyl, 3-Chlor-2-methylphenyl, 2-Chlor-5-methylphenyl, 4-Chlor-3-methylphenyl, 3 Chlor-4-methylphenyl, 2-Chlor-3,4-dimethylphenyl, 5-Chlor-2,4-dimethylphenyl, 4-Chlor-2,5-dimethylphenyl, o-, m- und p-Nitrophenyl, 2-Chlor-4-nitrophenyl, 4-Chlor-2-nitrophenyl, 2-Methyl-4-nitrophenyl, 4-Methyl-2-nitrophenyl, 4-i-Propyl-2-nitrophenyl, 4-tert.-Butyl-2-nitrophenyl, 4-Cyclohexyl-2-nitrophenyl, o-, m- und p-Methoxyphenyl, 2-Ethoxy- und 4-Ethoxyphenyl, 2- und 4-Phenoxyphenyl, 2-(2-Methylphenoxy)phenyl, 5-Chlor-2-methoxyphenyl, 5-Chlor-2-phenoxyphenyl, 5-Chlor-2-(4-chlorphenoxy)-phenyl, 2-Methoxy-4-nitrophenyl, 4-Methoxy-2-nitrophenyl, 4-Chlor-2,5-dimethoxyphenyl, 2-Methoxy-5-phenylsulfonylphenyl, 2-Methoxy-5-(benzylsulfonyl)-phenyl, 2- und 4-(4-tert.-Butylphenoxysulfonyl)-phenyl, 2- und 4-(4-Phenylphenoxysulfonyl)-phenyl, 2- und 4-(2-Methoxycarbonyl)-phenyl, 2- und 4-(2-Ethylhexyloxycarbonyl)-phenyl, 2- und 4-Benzyloxycarbonylphenyl, 2- und 4-(2-Phenoxyethoxycarbonyl)-phenyl, 2- und 4-(2-Hydroxyethoxy)-phenyl, 4-(2,3-Dihydroxypropoxy)-phenyl, 4-(3-(2-Ethylhexyloxy)-2-hydroxypropoxy)-phenyl, 2- und 4-(2-Hydroxyethoxycarbonyl)-phenyl.

2. $D^1$ hat die unter 1, angegebenen Bedeutungen von D, ist jedoch von D unabhängig. Beispiele für $(OH)_r$-$D^1$- bzw. $(OH)_p$-$D^1$- siehe die unter 1. für $(HO)_m$-D- bzw. $(HO)_q$-D angegebenen.

3. Die Ringe A und B in

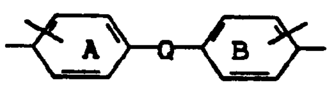

sind unsubstituiert oder tragen (je) einen Substituenten aus der Reihe $C_1$-$C_4$-Alkyl, $C_1$-$C_4$-Alkoxy, Halogen (Cl, Br), Nitro.

4. Ist o = 0, so steht $T^1$ für $C_1$-$C_{22}$-Alkyl, $C_2$-$C_{22}$-Alkenyl, $C_3$-$C_7$-Cycloalkyl, Benzyl, Phenethyl oder einen Rest der Formeln $T^2$-$(CH_2CH_2O)_b$-$CH_2CH_2$- und $T^2$-$(CH_2CH_2O)_b$-$CH_2CH_2CH_2$-, wobei $T^2$ für $C_1$-$C_{18}$-Alkoxy, $C_2$-$C_{18}$-Alkenyloxy oder gegebenenfalls substituiertes Phenoxy und b für 0 bis 6 steht.

Beispielhaft seien genannt: Methyl, Ethyl, n- und i-Propyl, Allyl, n- und i-Pentyl, Neopentyl, n-Hexyl, Cyclohexyl, n-Octyl, 2-Ethylhexyl, Decyl, Dodecyl, Palmityl, Stearyl, Oleyl, Benzyl, $-CH_2CH_2OCH_3$, $-CH_2CH_2OC_2H_5$, $-CH_2CH_2CH_2O(CH_2)_3CH_3$, $-CH_2CH_2CH_2OCH_2CH(C_2H_5)CH_2CH_2CH_2CH_3$, $-CH_2CH_2CH_2O(CH_2)_{11}CH_3$, $-CH_2CH_2OCH_2CH_2OCH_3$, $-CH_2CH_2CH_2OCH_2CH_2O(CH_2)_3CH_3$, $-CH_2CH_2O-C_6H_5$, $-CH_2CH_2CH_2O-C_6H_5$, $-CH_2CH_2CH_2OCH_2CH_2O-C_6H_5$.

5. Ist s = 0, so hat $T^1$ die unter 4. angegebenen Bedeutungen.

6. Ist t = 0, so hat T die unter 4. für $T^1$ angegebenen Bedeutungen, ist jedoch unabhängig von diesem.

7. Ist o > 0 so steht $T^1$ für einen $C_2$-$C_{22}$-Alkylrest, der durch 1 bis 6 O-Atome unterbrochen sein kann; Beispiele für entsprechende Hydroxyalkylreste sind:

$-CH_2CH_2OH$, $-CH_2CH_2CH_2OH$, $-CH_2CH(OH)CH_3$, $-CH_2CH(OH)CH_2CH_3$, $-C(CH_3)_2CH_2OH$, $-CH_2CH_2CH(OH)CH_3$, $-CH_2CH_2CH_2CH_2OH$, $-CH_2CH_2OCH_2CH_2OH$, $-CH_2CH_2(OCH_2CH_2)_p-OH$ (p = 1-5), $-CH_2CH_2CH_2OCH_2CH_2OH$, $-CH_2CH_2CH_2(OCH_2CH_2)_qOH$ (q = 1-3), $-CH_2CH_2CH_2O(CH_2)_4OH$, $-CH_2CH_2CH_2O(CH_2)_6OH$, $-CH_2CH_2CH_2OCH_2CH_2CH(CH_3)CH_2CH_2OH$, $-CH_2CH(OH)CH_2OH$.

8. Ist s > 0, so hat $T^1$ die unter 7. angegebenen Bedeutungen.

9. Ist t > 0, so hat T die unter 7. angegebenen Bedeutungen für $T^1$, ist jedoch unabhängig von diesem.

10. M bezeichnet einen $C_2$-$C_{20}$-Kohlenwasserstoffrest, der durch 1 bis 7 O-Atom(e) unterbrochen sein kann. Geeignete Reste M sind z.B.: $-CH_2CH_2-$, $-CH_2CH_2CH_2-$, $-CH_2CH_2CH_2CH_2-$, $-CH_2CH_2CH_2CH_2CH_2-$, $-CH_2CH_2CH_2CH_2CH_2CH_2-$, $-CH_2CH_2(OCH_2CH_2)_u-$ (u = 1, 2, 3, 4, 5, 6), $-CH_2CH_2CH_2(OCH_2CH_2)_vOCH_2CH_2CH_2-$ (v = 1, 2, 3, 4, 5, 6), $-CH_2CH_2CH_2O(CH_2)_4OCH_2CH_2CH_2-$,

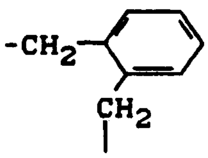 , 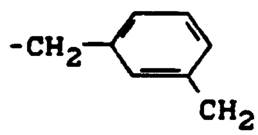 , 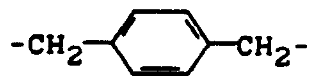

11. q = 1
12. r = 1
13 s = 1
14. t = 1

Die Kombination mehrerer dieser Strukturmerkmale 1 bis 14 führt zu besonders bevorzugten hydroxylgruppenhaltigen Pyridonazofarbstoffen, z.B.: 1,4; 1,7; 11,12; 10.11.12; 3.5.6; 3.5.9; 3.5.14; 3.6.8; 3.6.13; 3.8.9; 3.8.13; 3.8.14; 3.9.13; 3.9.14; 3.13.14; 5.6.14; 5.9.14; 6.8.13; 8.9.13; 8.9.14; 8.13.14; 9.13.14; 3.8.9.13.14.

Ganz besonders bevorzugt werden Farbstoffe der Formel

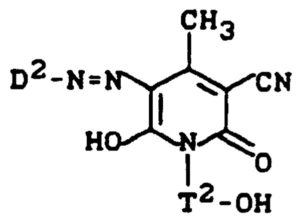 (V)

eingesetzt, in der

$D^2$ einen Phenylrest bezeichnet, der z.B. durch 1 oder 2 Substituenten aus der Reihe $C_1$-$C_{12}$-Alkyl, z.B. Methyl, Ethyl, tert.-Butyl, Dodecyl, $C_1$-$C_{12}$-Alkoxy, z.B. Methoxy, Ethoxy, $C_1$-$C_{12}$-Alkylcarbonyl, z.B. 2-Ethylhexylcarbonyl, $C_1$-$C_{12}$-Alkoxycarbonyl, z.B. n-Butoxycarbonyl, Halogen, z.B. Cl, Br, Phenylsulfonyloxy, substituiert sein kann und

$HO-T^2-$ für $-CH_2CH_2OH$, $-CH_2CH_2CH_2OH$, $-CH_2CH_2OCH_2CH_2OH$ oder $-C(CH_3)_2CH_2OH$ steht.

Die Farbstoffe der Formeln I bis V sind bekannt oder können in Analogie zu literaturbekannten Verfahren hergestellt werden (siehe z.B. DE-OS 2 216 207, DE-OS 3 111 648, DE-OS 3 012 863, DE-OS 2 152 536, US-PS 4 476 318, EP-OS 211 326).

Bei den zur Veresterung der Farbstoffe I bis V eingesetzten $C_{30}$-$C_{60}$-Di- oder Tricarbonsäuren handelt es sich vorzugsweise um die literaturbekannten Dimer- und/oder Trimersäuren bzw. deren Hydrierungsprodukte (siehe z.B. Ullmanns Encyclopädie der Technischen Chemie, 4. Auflage, Band 10, Seite 141; Verlag Chemie Weinheim 1979; Kirk-Othmer, Encyclopedia of Chemical Technology, 3. ed., vol. 7, p. 768, John Wiley u. Sons, New York, 1979; Römpp Chemie-Lexikon, Franck'sche Verlagshandlung, Stuttgart 1981, 8. Aufl., Bd. 2, S. 964). Vorzugsweise handelt es sich um technische Gemische mit 30 bis 90 Gew.-% Dimer-und 70 bis 10 Gew.-% Trimeranteil und untergeordneten Mengen an monobasischen Carbonsäuren. Der Dimeranteil besteht vorzugsweise aus acyclischen und/oder cyclischen $C_{36}$-Dicarbonsäuren, der Trimeranteil vorzugsweise aus $C_{54}$-Tricarbonsäuren. Die Dimer- und Trimersäuren sind durch Oligomerisation ungesättigter Fettsäuren, z.B. Tallölfettsäuren, Ölsäure, Elaidinsäure, Linolsäure, erhältlich.

Zusätzlich zu den genannten hydroxylgruppenhaltigen Polyazofarbstoffen und den $C_{30}$-$C_{60}$-Di- oder Tricarbonsäuren können noch weitere Mono- und Polyalkohole sowie Mono- und Polycarbonsäuren bei der Veresterung zugegen sein und in den entsprechenden Ester mit eingebaut werden.

Geeignete Monoole sind z.B. $C_1$-$C_9$-Alkanole wie Methanol, Ethanol, sowie höhere gesättigte oder ungesättigte, geradkettige oder verzweigte aliphatische Alkohole, vorzugsweise gesättigte oder ungesättigte $C_{10}$-$C_{22}$-Fettalkohole, oder Umsetzungsprodukte von Fettalkoholen, $C_{10}$-$C_{22}$-Fettsäuren oder von Harzsäuren mit Ethylen- oder Propylenoxid, wie sie z.B. als Emulgatoren und Dispergiermittel Verwendung finden. Weiterhin kommen in Frage Benzylalkohol oder Umsetzungsprodukte von Phenolen mit Ethylen- oder Propylenoxid. Besonders bevorzugt werden folgende Monoole eingesetzt: Diethylenglykolmonomethylether, Benzylalkohol, 2-Phenoxyethanol, Oleylalkohol, Umsetzungsprodukt aus 1 Mol Dodecylalkohol und 3 Mol Ethylenoxid, 2-(2-Hydroxyethoxy)-biphenyl.

Geeignete Diole oder Polyole sind z.B. $C_2$-$C_{16}$-Di- oder Polyole, wie 1,2-, 1,3- und 1,4-Butandiol, Neopentylglykol, 1,6- und 2,5-Hexandiol, 3-Methyl-1,5-pentandiol, 2-Methyl-2-propyl-1,3-propandiol,

Octandiol (z.B. technische Gemische), Trimethyl-1,6-hexandiol (z.B. Gemische), 1,12-Octadecandiol, 1,1,1-Trimethylolethan, 1,1,1-Trimethylolpropan, Ethylenglykol, Propylenglykol, 1,4-Cyclohexandiol, 1,4-Cyclohexandimethanol, 2,2-Bis-(4-hydroxycyclohexyl)-propan, Bis-hydroxymethyl-tricyclodecan ("TCD-Diol") und die Umsetzungsprodukte dieser Verbindungen mit Ethylen- oder Propylenoxid. Weitere bevorzugte Hydroxyverbindungen sind $C_2$-$C_{16}$-Di- oder -Polyglykole mit 3 bis 20 Ethylenoxideinheiten, $C_2$-$C_{16}$-Di- oder -Polyglykole mit 3 bis 20 Propylenoxideinheiten sowie Mischpolymerisate aus Ethylen- und Propylenoxid sowie Umsetzungsprodukte von Diphenolen mit Ethylen- oder Propylenoxid z.B. 1,4-Bis-(2-hydroxyethoxy)-benzol und 2,2-Bis-(4-(2-hydroxyethoxy)-phenyl)-propan.

Besonders bevorzugt werden folgende Di- oder Polyole eingesetzt: Tetraethylenglykol, 2,2-Dimethyl-1,3-propandiol, 1,4-Bis-(2-hydroxyethoxy)-benzol, Trimethylolpropan, 2,2-Bis-[4-(2-hydroxyethoxy)-phenyl]-cyclohexan.

Geeignete Mono- oder Polycarbonsäuren, die bei der Veresterung in den entstehenden oligomeren Ester mit eingebaut werden können, sind z.B. gesättigte oder ungesättigte $C_{10}$-$C_{22}$-Fettsäuren und bevorzugt $C_8$-$C_{16}$-Dicarbonsäuren wie Korksäure, Azelainsäure, Sebacinsäure, Dodecandisäure, Dodecenylbernsteinsäure, Hexahydrophthalsäure, Tetrahydrophthalsäure, 4-Methylhexahydrophthalsäure.

Bei den genannten Veresterungen können auch Verbindungen eingesetzt werden, die sowohl eine Carboxyl- als auch eine aliphatische Hydroxylgruppe enthalten und die somit eine Kettenverlängerung bewirken können. Dabei handelt es sich insbesondere um $C_2$-$C_{22}$-Hydroxycarbonsäuren, z.B. Glykolsäure, Milchsäure, 3-Hydroxypropansäure, ε-Hydroxy-capronsäure, Ricinolsäure, Hydroxystearinsäure oder gegebenenfalls die Lactone, Oligomere oder Polymere dieser Verbindungen.

Bei der Veresterung werden die Mengen an Dimer- und Trimersäure so gewählt, daß das Verhältnis an Carboxylgruppenäquivalenten der Dimer- oder Trimersäuren zu den Hydroxylgruppenäquivalenten der Pyridonazofarbstoffe vorzugsweise wenigstens 0,5:1, bevorzugt wenigstens 0,8:1 und ganz besonders bevorzugt wenigstens 1:1 und maximal 8:1, bevorzugt 6:1 und ganz besonders bevorzugt maximal 4:1 beträgt. Der Anteil an Pyridonazofarbstoffen am Gesamtgewicht der lösungsmittelfreien Veresterungsprodukte soll dabei zwischen mindestens 10 % und maximal 70 %, bevorzugt zwischen 15 % und 50 % liegen.

Bei den Veresterungen werden die zu veresternden hydroxyl- und carboxylgruppenhaltigen Komponenten im einfachsten Fall in äquivalenten Mengen eingesetzt. Es kann jedoch zweckmäßig sein, die carboxylgruppenhaltigen Komponenten im Überschuß zu verwenden, und zwar vor allem dann, wenn die hydroxygruppenhaltigen Pyridonazofarbstoffe noch schwerer löslich sind und erst durch Veresterung in besser lösliche Verbindungen überführt werden. Innerhalb der oben angegebenen Grenzen können die Mengenverhältnisse der eingesetzten Komponenten weit variiert werden, wobei man durch geeignete Wahl des Verhältnisses von mono- zu bifunktionellen Komponenten das Molekulargewicht der entstehenden Verbindungen und damit die Viskosität der daraus hergestellten Druckfarben beeinflussen und an die gewünschten Werte anpassen kann.

Die Veresterung selbst kann auf übliche Weise durchgeführt werden, wie es z.B. in Houben-Weyl, Methoden der organischen Chemie, 4. Auflage, Band VIII, S. 516 ff., Georg Thieme Verlag, Stuttgart 1952, beschrieben wird. Zur Veresterung von hydroxylgruppenhaltigen Pyridonazofarbstoffen siehe z.B. EP-OS 211 326.

So können z.B. die Komponenten in einem geeigneten Lösungsmittel in Gegenwart eines sauren Katalysators erhitzt und das dabei entstehende Wasser azeotrop entfernt werden. Saure Katalysatoren sind beispielsweise: Schwefelsäure, Salzsäure, Chlorsulfonsäure, Phosphorsäure, Methan-, Ethan- und Butansulfonsäure, Benzol-, Toluol- und Dodecylbenzolsulfonsäure, Naphthalin-1- und -2-sulfonsäure und saure Austauscher. Geeignete Lösungsmittel sind z.B. Cyclohexan, Toluol und diejenigen Mineralöle, die auch für die Herstellung von Offsetdruckfarben verwendet werden sowie Mischungen dieser Lösungsmittel.

Nach beendeter Reaktion können falls erforderlich die Lösungsmittel abdestilliert werden; die Katalysatoren können in den Produkten verbleiben oder mit Wasser ausgewaschen oder mit einer geeigneten Base, z.B. einem Fettamin, neutralisiert werden.

Die Veresterungsprodukte sind ölige oder harzige Substanzen, die leicht in die üblichen Offsetfirnisse eingearbeitet werden können z.B. durch Vermischen mit einem Schnellrührer, wobei man gegebenenfalls leicht erwärmen kann.

Die erfindungsgemäßen veresterten Pyridonazofarbstoffe eignen sich zum Färben aller Arten von Offsetdruckfirnissen z.B. von Bogen- und Rollenoffsetfarben sowie von Quicksetdruckfarben. Sie vermögen die üblicherweise zum Färben von Offsetfarben verwendeten Pigmente und darüber hinaus auch die zur Herstellung der Firnisse normalerweise verwendeten Harze ganz oder teilweise zu ersetzen. Der Anteil der erfindungsgemäßen Veresterungsprodukte am Gesamtgewicht der Offsetfirnisse kann daher in weiten Grenzen schwanken und zwischen ca. 1 % und ca. 60 % liegen, bevorzugt zwichen ca. 5 % und ca. 40 %.

Die Erfindung betrifft weiterhin Offsetdruckfarben enthaltend ein Farbmittel(gemisch), einen Firnis (Bindemittel) sowie gegebenenfalls Zusatzstoffe, dadurch gekennzeichnet, daß das Farbmittel(gemisch) mindestens einen estergruppenhaltigen Pyridonazofarbstoff der oben angegebenen Art enthält.

Bevorzugt enthält die Druckfarbe 1 bis 60 Gew.-%, bezogen auf den Firnis, Farbmittel(gemisch).

Besonders bevorzugt enthält die Druckfarbe 5 bis 40 Gew.-%, bezogen auf den Firnis, Farbmittel(gemisch).

Bei den erfindungsgemäßen Druckfarben besteht das Farbmittel bevorzugt aus estergruppenhaltigen Pyridonazofarbstoffen der o.a. Art. Es kann jedoch auch vorteilhaft sein, diese estergruppenhaltigen Pyridonazofarbstoffe zusammen mit üblichen Druckfarbenpigmenten oder Ruß zu verwenden. Da volle Verträglichkeit mit den herkömmlichen Offsetdruckfarben auf Pigmentbasis besteht, können die erfindungsgemäß eingesetzten estergruppenhaltigen Pyridonazofarbstoffe in beliebigen Gewichtsverhältnissen zu den Pigmenten vorliegen. Naturgemäß können die erfindungsgemäßen Druckfarben neben den estergruppenhaltigen Pyridonazofarbstoffen und gegebenenfalls Druckfarbenpigmenten auch noch andere Farbstoffe enthalten.

Der Offsetdruckfarbenfirnis enthält üblicherweise ein Gemisch aus Hartharz, Mineralöl, Alkydharz und/oder Leinöl, wobei der Hartharzanteil im allgemeinen ≤45 Gew.-%, bezogen auf die Druckfarbe, beträgt.

Als Zusatzstoffe kommen z.B. Sikkative, Hautverhinderungsmittel, Verlaufmittel, Gelier- und Thixotropiemittel u.a. in Betracht.

Eine beispielhafte Zusammensetzung einer Offsetdruckfarbe ist im folgenden gegeben:

15 bis 35 Gew.-% Farbmittel (estergruppenhaltiger Pyridonazofarbstoff), 10 bis 60 Gew.-% Mineralöl, 1 bis 10 Gew.-% langöliges Alkydharz, 0 bis 10 Gew.-% Titandioxid, 0 bis 5 Gew.-% Verdickungsmittel, z.B. auf Montmorillonitbasis, 10 bis 30 Gew.-% Kohlenwasserstoffharz, wobei die Summe der Komponenten 100 Gew.-% beträgt.

Die Verwendung der o.a. estergruppenhaltigen Pyridonazofarbstoffe ergibt Offsetdruckfarben mit hoher Lasur, hohem Glanz und hoher Farbstärke. Die esterguppenhaltigen Pyridonazofarbstoffe zeigen eine hervorragende Löslichkeit in den Druckfarben, wobei der bei der Verwendung von Pigmenten für deren Dispergierung erforderliche Dispergieraufwand entfällt. Die Druckfarben weisen eine gute Stabilität auf.

## Beispiele

### Beispiel 1

102,7 g (0,3 Mol) eines auf übliche Weise durch Diazotieren und Kuppeln erhaltenen Farbstoffes der Formel:

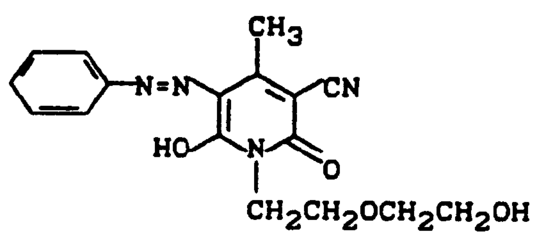

243,6 g Pripol 1010, eine handelsübliche dimerisierte Fettsäure (Dimersäure) der Firma Unichema mit einer Säurezahl von ca. 195, 400 ml Toluol und 2 g Methansulfonsäure werden eine Stunde unter Rückfluß erhitzt und dabei das bei der Veresterung entstehende Wasser in einem Wasserabscheider agbeschieden. Danach gibt man 24,8 g (0,18 Mol) 2-Phenoxyethanol und 15,6 g (0,15 Mol) Pentaglykol (2,2-Dimethyl-1,3-propandiol) hinzu und erhitzt weitere 4 Stunden am Wasserabscheider. Die erhaltene klare Lösung wird eingedampft und das restliche Toluol im Wasserstrahlvakuum bei einer Badtemperatur von 90 bis 100°C entfernt. Man erhält 383 g einer in der Hitze dickflüssigen Harzes, das in der Kälte wachsartig erstarrt.

26 g des so gewonnenen farbigen Harzes werden mit Hilfe eines Schnellrührers eingerührt in eine Mischung bestehend aus 22 g Pionier 6625, einem hochviskosen Mineralöl der Firma Hansen und Rosenthal, 3 g Lackleinöl (Rohleinöl), 5 g Alkydal L 67, einem Alkydharz der Firma Bayer, 12 g PKWF 30/30, einem Mineralöl der Firma Johann Haltermann, 5 g Bayertitan RFDI, einem Titandioxid der Firma Bayer, 2,5 g Bentone 38 (Verdickungsmittel auf Basis eines organischen Montmorillonit-Derivats der Firma Bentone-Chemie), sowie 24,5 g Setalin MK 231, einem Kohlenwasserstoffharz der Kunstharzfabrik Synthese B.V.. Man erhält 100 g einer Druckfarbe, die sich sehr gut für den Rollenoffsetdruck eignet.

Analog zu dem im Beispiel 1 angegebenem Verfahren wurden aus den in der Tabelle 1 aufgeführten Pyridonazofarbstoffen der folgenden allgemeinen Formel durch Verestern mit den in der Tabelle 2 angegebenen Mengen an Dimerund Trimersäuren und Alkoholen in den dort angegebenen Mengen Farbharze und dar-

aus Offsetdruckfarben hergestellt:

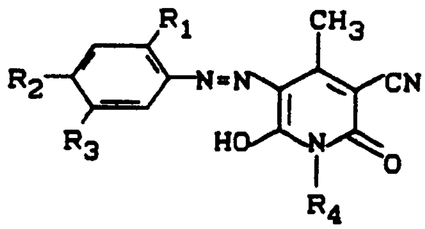

**Tabelle 1**

| Farbstoff | $R_1$ | $R_2$ | $R_3$ | $R_4$ |
|---|---|---|---|---|
| I | H | H | H | $-CH_2CH_2OCH_2CH_2OH$ |
| II | H | H | H | $-CH_2CH_2CH_2OH$ |
| III | H | $CH_3$ | H | $-CH_2CH_2OCH_2CH_2OH$ |
| IV | H | Dodecyl | H | $-CH_2CH_2CH_2OH$ |
| V | H | tert.-Butyl | H | $-CH_2CH_2OCH_2CH_2OH$ |
| VI | 2-Ethylhexylcarbonyl | H | H | $-CH_2CH_2OCH_2CH_2OH$ |
| VII | n-Butoxycarbonyl | H | H | $-CH_2CH_2OCH_2CH_2OH$ |
| VIII | H | $CH_3$ | $CH_3$ | $-CH_2CH_2OCH_2CH_2OH$ |
| IX | H | H | $CH_3$ | $-CH_2CH_2OCH_2CH_2OH$ |
| X | H | Phenylsulfonyloxy | H | $-CH_2CH_2OCH_2CH_2OH$ |
| XI | H | Cl | H | $-CH_2CH_2OCH_2CH_2OH$ |
| XII | H | H | H | $-CH_2CH_2OH$ |
| XIII | H | $CH_3$ | H | $-CH_2CH_2OH$ |
| XIV | H | H | H | $-C(CH_3)_2CH_2OH$ |
| XV | H | $CH_3$ | H | $-C(CH_3)_2CH_2OH$ |

Tabelle 2

In der Spalte C wird die pro Mol Farbstoff eingesetzte Menge an Dimer- oder Trimersäure in Äquivalenten an Carboxylgruppen angegeben.

In der Spalte A wird die pro Mol Farbstoff eingesetzte Menge an monofunktionellen Alkoholen in Molen angegeben.

In der Spalte D wird die pro Mol Farbstoff eingesetzte Menge an polyfunktionellen Alkoholen in Molen angegeben.

Bei Pripol 1017 und 1010 handelt es sich um Dimersäuren und bei Pripol 1040 und 1049 um Trimersäuren der Firma Unichema.

| Beispiel | Farbstoff | C | Dimer oder Trimersäure | A | Monool | D | Di- oder Polyol |
|---|---|---|---|---|---|---|---|
| 2 | I | 1,4 | Pripol 1017 | 0,6 | Diethylenglykol-monomethylether | 0,5 | Tetraethylen-glykol |
| 3 | I | 1,4 | Pripol 1010 | 0,5 | Benzylalkohol | 0,5 | 2,2-Dimethyl-1,3-propandiol |
| 4 | I | 1,4 | Pripol 1010 | 0,6 | Benzylalkohol | 0,5 | 1,4-Bis-(2-hy-droxyethoxy)-benzol |
| 5 | I | 1,4 | Pripol 1010 | - | - | 0,5 | " |
| 6 | I | 1,4 | Pripol 1010 | - | - | 0,6 | " |
| 7 | I | 1,5 | Pripol 1010 | 0,5 | Benzylalkohol | 0,4<br>0,2 | "<br>Trimethylolpropan |
| 8 | I | 0,8 | Pripol 1040 | 0,8 | 2-Phenoxyethanol | 0,2 | 2,2-Dimethyl-1,3-propandiol |
| 9 | II | 0,8 | Pripol 1040 | 0,8 | 2-Phenoxyethanol | 0,2 | 1,4-Bis-(2-hy-droxyethoxy)-benzol |
| 10 | II | 0,8 | Pripol 1049 | 0,8 | 2-Phenoxyethanol | 0,2 | " |
| 11 | II | 1,3 | Pripol 1010 | 0,6 | 2-Phenoxyethanol | 0,4 | " |
| 12 | III | 1,4 | Pripol 1010 | 0,6 | 2-Phenoxyethanol | 0,5 | 2,2-Dimethyl-1,3-propandiol |
| 13 | III | 1,0 | Pripol 1010 | 0,4 | Oleylalkohol | 0,2 | 2-Bis-[4-(2-hydroxyethoxy)-phenyl]-cyclo-hexan |
| 14 | IV | 1,1 | Pripol 1010 | - | - | 0,5 | 1,4-Bis-(2-hy-droxyethoxy)-benzol |
| 15 | IV | 1,1 | Pripol 1010 | 0,7 | 2-Phenoxyethanol | - | - |

| Beispiel | Farbstoff | C | Dimer oder Trimersäure | A | Monool | D | Di- oder Polyol |
|---|---|---|---|---|---|---|---|
| 16 | V | 1,3 | Pripol 1010 | 0,6 | 2-Phenoxyethanol | 0,4 | 2,2-Dimethyl-1,3-propandiol |
| 17 | VI | 1,4 | Pripol 1010 | 0,6 | 2-Phenoxyethanol | 0,5 | " |
| 18 | VI | 0,8 | Pripol 1049 | 1,4 | 2-Phenoxyethanol | - | - |
| 19 | VII | 0,8 | Pripol 1049 | 1,3 | Dodecylalkohol + 3 Mol Ethylenoxid | - | - |
| 20 | VIII | 1,4 | Pripol 1010 | 0,6 | 2-(2-Hydroxy-ethoxy)-biphenyl | 0,5 | 2,2-Dimethyl-1,3-propandiol |
| 21 | IX | 1,4 | Pripol 1010 | 0,6 | 2-Phenoxyethanol | 0,5 | " |
| 22 | X | 1,4 | Pripol 1010 | 0,6 | 2-Phenoxyethanol | 0,5 | " |
| 23 | XI | 1,4 | Pripol 1010 | 0,6 | 2-Phenoxyethanol | 0,5 | " |
| 24 | XII | 1,4 | Pripol 1017 | 0,6 | 2-Phenoxyethanol | 0,5 | " |
| 25 | XIII | 1,4 | Pripol 1017 | 0,6 | 2-Phenoxyethanol | 0,5 | " |
| 26 | XIV | 1,4 | Pripol 1017 | 0,6 | 2-Phenoxyethanol | 0,5 | " |
| 27 | XV | 1,4 | Pripol 1017 | 0,6 | 2-Phenoxyethanol | 0,5 | " |

Beispiel 28

38,2 g (0,05 Mol) des gelben Farbstoffes der Formel

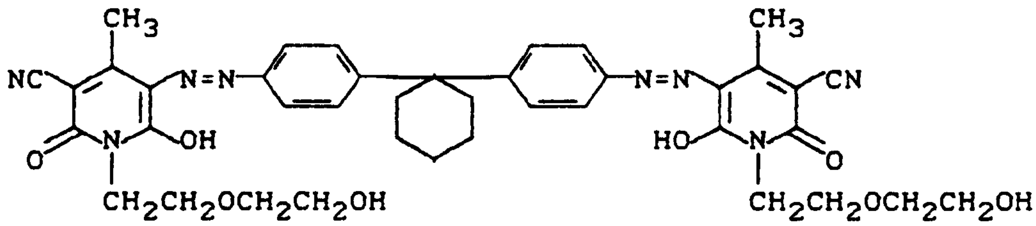

87 g Pripol 1010 und 19,4 g (0,18 Mol) Benzylalkohol werden in 150 ml Toluol unter Zusatz von 1 g Methansulfonsäure wie bei Beispiel 1 beschrieben verestert. Nach dem Einengen erhält man 145,1 g eines gelben Harzes, das sich sehr gut zum Einarbeiten in Offsetdruckfarben eignet.

Beispiel 29

Verestert man 114,6 g (0,15 Mol) des gleichen Farbstoffes wie bei Beispiel 24 in analoger Weise mit 226,2 g Pripol 1010, 11,3 g (0,04 Mol) Ölsäure und 58,4 g (0,54 Mol) Benzylalkohol, so erhält man 408,7 g eines gefärbten Harzen, das sich ebenfalls für den Einsatz in Offsetdruckfarben eignet.

## Patentansprüche

1. Offsetdruckverfahren, dadurch gekennzeichnet, daß man estergruppenhaltige Pyridonazofarbstoffe verwendet, die dadurch erhältlich sind, daß man hydroxygruppenhaltige Pyridonazofarbstoffe der Formel

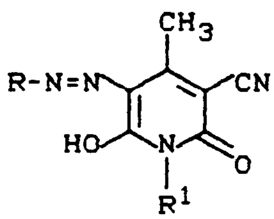

(I)

in der

R $(HO)_m$-D- oder

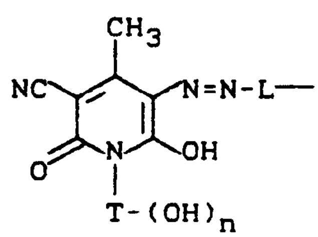

$R^1$ $(HO)_o$-$T^1$- oder

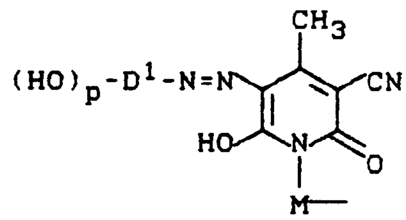

und

D, $D^1$ Reste von Diazokomponenten bezeichnen,

L für

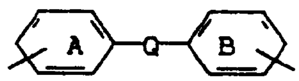

,

wobei die mit A und B bezeichneten Ringe substituiert sein können, steht,

Q für -O-, -S-, $-SO_2-$, -CO-, $-C_xH_{2x}-$, (x = 1, 2, 3, 4, 5, 6) oder

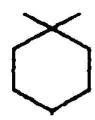

steht,

M den Rest eines gegebenenfalls substituierten Kohlenwasserstoffs dessen C-Kette durch ein oder mehrere, nichtnachbarständige O-Atome unterbrochen sein kann, bezeichnet,

T, $T^1$ für aliphatische oder araliphatische Reste stehen, die durch ein oder mehrere O-Atom(e) unterbrochen sein können und

m,n,o,p 0, 1, 2 oder 3 sind, mit der Maßgabe, daß die Summe aus m + o oder m + p oder n + o oder n + p 1, 2 oder 3 beträgt

mit $C_{30}$-$C_{60}$-Di- und/oder Tricarbonsäuren und gegebenenfalls anderen Mono- und/oder Dicarbonsäuren verestert, und man im Veresterungsprodukt gegebenenfalls noch vorhandene Carboxylgruppen gegebenenfalls mit Mono- oder Polyolen verestert.

2. Offsetdruckverfahren gemäß Anspruch 1, dadurch gekennzeichnet, daß man estergruppenhaltige Pyridonazofarbstoffe, die durch Veresterung von Farbstoffen der Formel

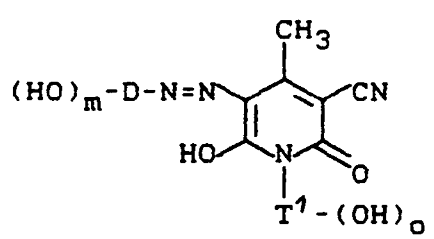

(II)

erhältlich sind, einsetzt.

3. Offsetdruckverfahren gemäß Anspruch 1, dadurch gekennzeichnet, daß man estergruppenhaltige Pyridonazofarbstoffe einsetzt, die durch Veresterung von Farbstoffen der Formel

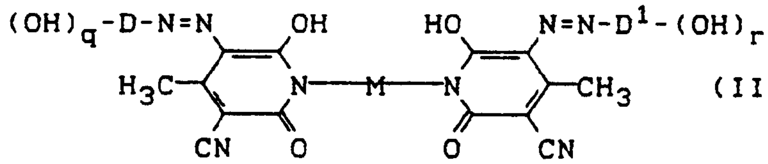

(III)

in der q, r 0, 1, 2, 3 bezeichnen, mit der Maßgabe, daß q + r 1, 2 oder 3 beträgt, erhältlich sind.

**4.** Offsetdruckverfahren gemäß Anspruch 1, dadurch gekennzeichnet, daß man estergruppenhaltige Pyridonazofarbstoffe einsetzt, die durch Veresterung von Farbstoffen der Formel

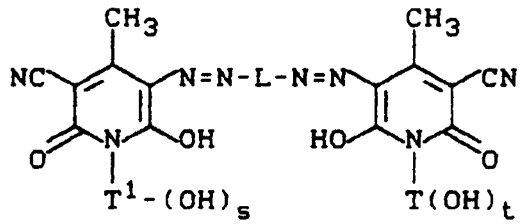

(IV)

in der s, t = 0, 1, 2, 3 bezeichnen, mit der Maßgabe, daß s + t 1, 2 oder 3 beträgt, erhältlich sind.

**5.** Offsetdruckverfahren gemäß Anspruch 1, dadurch gekennzeichnet, daß man estergruppenhaltige Pyridonazofarbstoffe einsetzt, die durch Veresterung von Farbstoffen der Formel

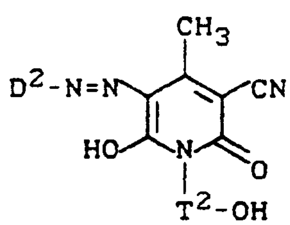

(V)

in der

$D^2$ einen Phenylrest bezeichnet, der z.B. durch 1 oder 2 Substituenten aus der Reihe $C_1$-$C_{12}$-Alkyl, $C_1$-$C_{12}$-Alkoxy, $C_1$-$C_{12}$-Alkylcarbonyl, $C_1$-$C_{12}$-Alkoxycarbonyl, Halogen, Phenylsulfonyloxy, substituiert sein kann und

HO-$T^2$- für $-CH_2CH_2OH$, $-CH_2CH_2CH_2OH$, $-CH_2CH_2OCH_2CH_2OH$ oder $-C(CH_3)_2CH_2OH$ steht.

**6.** Offsetdruckverfahren gemäß einem oder mehreren der Ansprüche 1 bis 5, dadurch gekennzeichnet, daß man estergruppenhaltige Pyridonazofarbstoffe einsetzt, die durch Veresterung mit Dimer- und/oder Trimersäuren erhältlich sind.

**7.** Offsetdruckfarben enthaltend ein Farbmittel(gemisch), einen Firnis sowie gegebenenfalls Zusatzstoffe, dadurch gekennzeichnet, daß das Farbmittel(gemisch) mindestens einen estergruppenhaltigen Pyridonazofarbstoff gemäß den Ansprüchen 1 bis 6 enthält.

**8.** Offsetdruckfarben gemäß Anspruch 7, dadurch gekennzeichnet, daß das Farbmittel(gemisch) aus estergruppenhaltigen Pyridonazofarbstoffen gemäß den Ansprüchen 1 bis 6 besteht.

**9.** Offsetdruckfarben gemäß Anspruch 7 oder 8, dadurch gekennzeichnet, daß sie 1 bis 60 Gew.-%, bezogen auf den Firnis, Farbmittel(gemisch) enthalten.

**10.** Offsetdruckfarben gemäß Anspruch 7 oder 8, dadurch gekennzeicnet, daß sie 5 bis 40 Gew.-%, bezogen auf den Firnis, Farbmittel(gemisch) enthalten.

## Claims

**1.** Off-set printing process, characterized in that pyridonazo dyestuffs containing ester groups are used, which are available by esterifying hydroxyl-containing pyridinazo dyestuffs of the formula

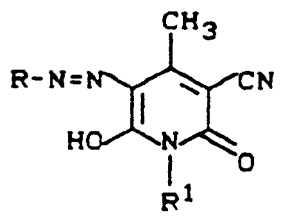

(I)

in which

R represents $(HO)_m$-D- or

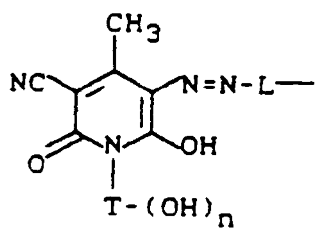

$R^1$ represents $(HO)_o$-$T^1$- or

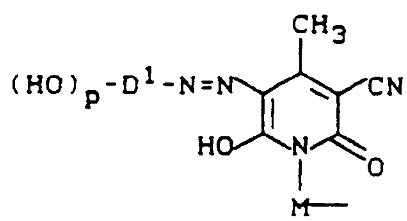

and

D, $D^1$ represent radicals of diazo components,

L represents

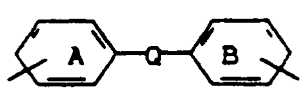

,

in which the rings designated with A and B can be substituted,

Q represents -O-, -S-, $-SO_2-$, -CO-, $-C_xH_{2x}-$, (x is 1, 2, 3, 4, 5, 6), or

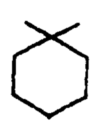

M represents the radical of a substituted or unsub-stituted hydrocarbon whose C chain can be interrupted by one or more non-adjacent O atoms,

T, $T^1$ represent aliphatic or araliphatic radicals which can be interrupted by one or more O atom(s) and

m,n,o,p are 0, 1, 2 or 3, with the proviso that the sum of m + o or m + p or n + o or n + p is 1, 2 or 3,

with $C_{30}$-$C_{60}$-di- and/or tricarboxylic acids and, if appropriate, other mono- and/or dicarboxylic acids, and esterifying any carboxyl groups which may still be present in the esterification product, if desired, with mono- or polyols.

**2.** Off-set printing process according to Claim 1, characterized in that pyridonazo dyestuffs containing ester groups and available by esterification of dyestuffs of the formula

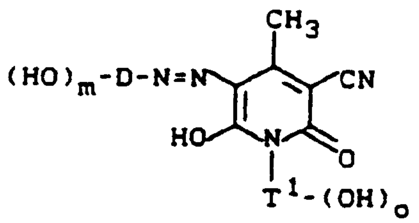

(II)

are used.

**3.** Off-set printing process according to Claim 1, characterized in that pyridonazo dyestuffs containing ester groups and available by esterification of dyestuffs of the formula

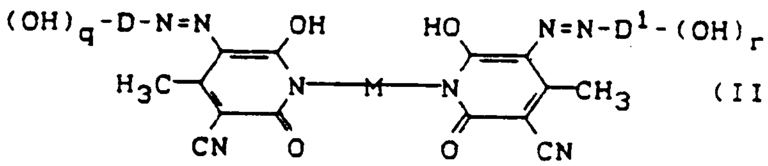

(III)

in which q, r represent 0, 1, 2, 3, with the proviso that
q + r is 1, 2 or 3
are used.

**4.** Off-set printing process according to Claim 1, characterized in that pyridonazo dyestuffs containing ester groups and available by esterification of dyestuffs of the formula

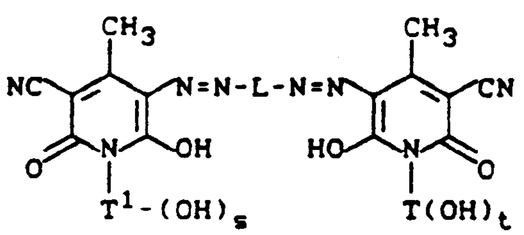

(IV)

in which s, t represent 0, 1, 2, 3, with the proviso that
s + t is 1, 2 or 3
are used.

**5.** Off-set printing process according to Claim 1, characterized in that pyridonazo dyestuffs containing ester groups and available by esterification of dyestuffs of the formula

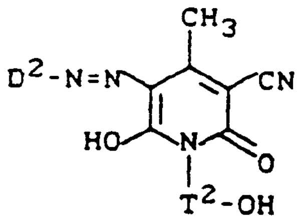

(V)

in which

$D^2$ represents a phenyl radical which can be substituted, for example, by 1 or 2 substituents from the series consisting of $C_1$-$C_{12}$-alkyl, $C_1$-$C_{12}$-alkoxy, $C_1$-$C_{12}$-alkylcarbonyl, $C_1$-$C_{12}$-alkoxycarbonyl, halogen, phenylsulphonyloxy, and

HO-$T^2$- represents $-CH_2CH_2OH$, $-CH_2CH_2CH_2OH$, $-CH_2CH_2OCH_2CH_2OH$ or $-C(CH_3)_2CH_2OH$ are used.

6. Off-set printing process according to one or more of Claims 1 to 5, characterized in that pyridonazo dyestuffs containing ester groups and available by esterification with dimeric and/or trimeric acids are used.

7. Off-set printing inks containing a colourant (mixture), a varnish and, if appropriate, additives, characterized in that the colourant (mixture) contains at least one pyridonazo dyestuff containing ester groups according to Claims 1 to 6.

8. Off-set printing inks according to Claim 7, characterized in that the colourant (mixture) consists of pyridonazo dyestuffs containing ester groups according to Claims 1 to 6.

9. Off-set printing inks according to Claim 7 or 8, characterized in that they contain 1 to 60 % by weight, relative to the varnish, of the colourant (mixture).

10. Off-set printing inks according to Claim 7 or 8, characterized in that they contain 5 to 40 % by weight, relative to the varnish, of the colourant (mixture).

**Revendications**

1. Procédé d'impression offset caractérisé en ce qu'on utilise des colorants pyridoneazoïques contenant des groupes esters, qu'on peut obtenir en estérifiant des colorants pyridoneazoïques hydroxylés de formule

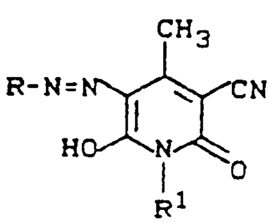

(I)

dans laquelle

R représente $(OH)_m$-D- ou

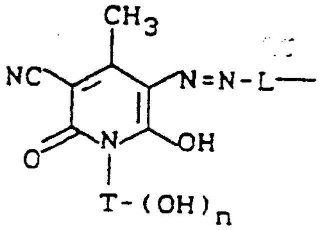

$R^1$ représente $(OH)_o$-$T^1$- ou

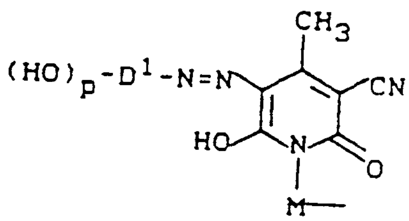

D, $D^1$ désignent des restes de constituants diazoïques,
L représente

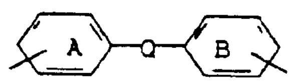
,

où les cycles désignés par A et B peuvent être substitués,
Q est -O-, -S-, $-SO_2-$, -CO-, $C_xH_{2x}$-, (x = 1, 2, 3, 4, 5, 6), ou

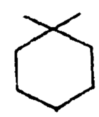

M désigne le reste d'un hydrocarbure éventuellement substitué dont la chaîne carbonée peut être interrompue par un ou plusieurs atomes d'oxygène non adjacents,
T, $T^1$ représentent des restes aliphatiques ou araliphatiques qui peuvent être interrompus par un ou plusieurs atomes d'oxygène et
m, n, o, p sont 0, 1, 2, ou 3, à condition que la somme m + o ou m + p ou n + o ou n + p s'élève à 1, 2 ou 3,
avec des acides di- et/ou tricarboxyliques en $C_{30}$-$C_{60}$ et éventuellement d'autres acides mono- et/ou dicarboxyliques, et en estérifiant éventuellement avec des monoalcools ou des polyols les groupes carboxyle restant éventuellement dans le produit estérifié.

2. Procédé d'impression offset selon la revendication 1, caractérisé en ce qu'on utilise des colorants pyridoneazoïques contenant des groupes esters et qui peuvent être obtenus par estérification de colorants de formule

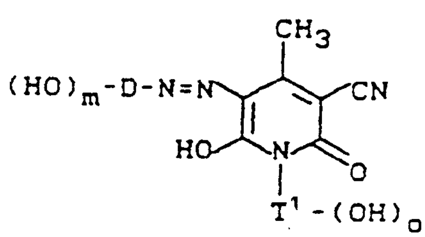
(II)

3. Procédé d'impression offset selon la revendication 1, caractérisé en ce qu'on utilise des colorants pyridoneazoïques contenant des groupes esters et qui peuvent être obtenus par estérification de colorants de formule

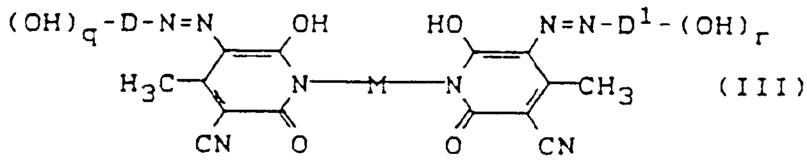

(III)

dans laquelle q, r représentent 0, 1, 2, 3, à condition que q + r s'élève à 1, 2 ou 3.

4. Procédé d'impression offset selon la revendication 1, caractérisé en ce qu'on utilise des colorants pyridoneazoïques contenant des groupes esters et qui peuvent être obtenus par estérification de colorants de formule

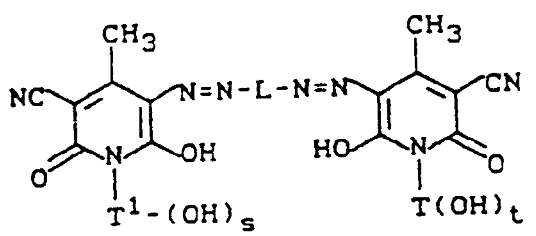

(IV)

dans laquelle s, t = 0, 1, 2, 3, à condition que s + t s'élève à 1, 2 ou 3.

5. Procédé d'impression offset selon la revendication 1, caractérisé en ce qu'on utilise des colorants pyridoneazoïques contenant des groupes esters et qui peuvent être obtenus par estérification de colorants de formule

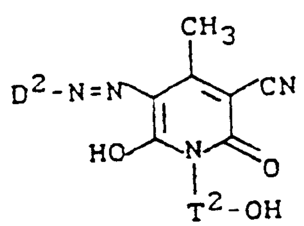

(V)

dans laquelle
$D^2$ désigne un reste phényle qui peut être substitué par exemple par 1 ou 2 substituants de la série des alkyle en $C_1$-$C_{12}$, alcoxy en $C_1$-$C_{12}$, alkylcarbonyle en $C_1$-$C_{12}$, alcoxycarbonyle en $C_1$-$C_{12}$, halogènes, phénylsulfonyloxy et HO-$T^2$- représente $-CH_2CH_2OH$, $-CH_2CH_2CH_2OH$, $-CH_2CH_2OCH_2CH_2OH$ ou $-C(CH_3)_2CH_2OH$.

6. Procédé d'impression offset selon l'une ou plusieurs des revendications 1 à 5, caractérisé en ce qu'on utilise des colorants pyridoneazoïques contenant des groupes esters, qui peuvent être obtenus par estérification avec des acides dimères et/ou trimères.

7. Encres d'impression offset contenant un colorant (ou mélange de colorants), un vernis et éventuellement des additifs, caractérisées en ce que le colorant (ou mélange de colorants) contient au moins un colorant pyridoneazoïque contenant des groupes esters selon les revendications 1 à 6.

8. Encres d'impression offset selon la revendication 7, caractérisées en ce que le colorant (ou mélange de colorants) est composé de colorants pyridoneazoïques contenant des groupes esters selon les revendications 1 à 6.

9. Encres d'impression offset selon la revendication 7 ou 8, caractérisées en ce qu'elles contiennent de 1 à 60 % en poids, par rapport au vernis, de colorant (ou mélange de colorants).

10. Encres d'impression offset selon la revendication 7 ou 8, caractérisées en ce qu'elles contiennent de 5 à 40 % en poids, par rapport au vernis, de colorant (ou mélange de colorants).